# EUROPÄISCHE PATENTANMELDUNG

(11) **EP 1 078 581 A1**
(43) Veröffentlichungstag der Anmeldung: **28.02.2001**
(21) Anmeldenummer: 99116941.8
(22) Anmeldetag: 27.08.1999
(51) Int. Cl.: A23N 5/00

(54) **Verfahren und Vorrichtung zum Schälen von Ölsaatsamen, insbesondere Sonnenblumensamen**

(71) Anmelder: Dr. Frische GmbH, D-63755 Alzenau (DE)
(72) Erfinder: von Rotenhan, Friedrich-Wilhelm, Freiherr, 97500 Ebelsbach (DE)
(74) Vertreter: Lippert, Marianne

(57) **Zusammenfassung**

Verfahren und Vorrichtung zum Schälen von Ölsaatsamen, insbesondere Sonnenblumensamen, bei dem die Ölsaatsamen beim Schälvorgang durch Rühren und unter Druckaufbau innerhalb eines Behälters (3) mittels einer Rührvorrichtung (110, 120) in einer Schüttgutmenge aus diesen Ölsaatsamen gegeneinander und gegen die in der Schüttgutmenge gehaltenen, abgelösten Schalenteile gedrückt und gerieben werden und die Ölsaatsamen vor dem Schälvorgang vorzugsweise soweit getrocknet werden, daß sich ihr durch Feuchtigkeitsabgabe geschrumpfter Kern von der Samenschale trennt und sich insbesondere im Fall von Sonnenblumensamen ein Zwischenraum zwischen dem Kern und der Samenschale bildet.

## Beschreibung

Die Erfindung betrifft ein Verfahren und eine Vorrichtung zum Schälen von Ölsaatsamen, insbesondere Sonnenblumensamen. Das bedeutet eine Trennung der Schale (Perikarp) vom Kern (Embryo) der Körner (im Fall der Sonnenblumen der Achänen).

Ölsaaten von Ölpflanzen wie Sonnenblumen, Euphorbia Lathyris und Koriander zeichnen sich in der Regel dadurch aus, daß ihr Kern durch eine Samenhaut zusammengehalten wird, welche wiederum durch eine poröse, Wasser aufnehmende Schale (Perikarp) geschützt ist. Werden die Schalen vor der Ölgewinnung nicht entfernt, so saugen sie erhebliche Ölmengen von mindestens 7% ihres Gewichtes ein, so daß die Ölausbeute beim Pressen verringert ist. Das in die Schalen eingesaugte Öl kann nachträglich nur durch Extraktion mittels Lösemitteln gewonnen werden.

Es sind seit geraumer Zeit die unterschiedlichsten Verfahren und Vorrichtungen eingesetzt worden, um z.B. Sonnenblumensamen oder andere Ölfrüchte wie Sojabohnen zu schälen. Eine häufig angewandte Methode besteht darin, die einzelnen Samen stark zu beschleunigen und durch Aufprall zu schälen, wobei die Samen mit hoher Geschwindigkeit gegen einen Festgegenstand prallen, so daß ihre Schale durch die Abbremskraft beim Aufprall gesprengt wird. So werden rotierende Tellerscheiben aus Metall oder Hartkunststoff eingesetzt, die die Körner gegen eine Prallplatte schleudern, an der sie entsprechend ihrer eigenen Härte und der einwirkenden mechanischen Kräfte zerbersten. Der entstandene Kleinbruch aus den Kernen die Schalenbruchstücke werden durch Exhauster abgesaugt oder mit Schüttelsieben abgesiebt. Ferner sind modifizierte Vorrichtungen zum Schälen von Sonnenblumensamen oder Sojabohnen vorgeschlagen worden, die auch die Samen bzw. Körner oder Bohnen möglichst einzeln beschleunigen und durch Aufprall schälen (z.B. DE 29 16 729 A1). In den altbekannten Schlagleistenschälern werden ebenfalls Schlagwirkung und Aufprall zum Schälen genutzt. Als alternative Vorrichtungen sind Gummiwalzenschäler und Vorrichtungen mit zwei rotierenden Gummiplatten eingesetzt worden, zwischen denen die Samen unter leichtem Druck gerollt werden, um die Schalen abzulösen. Hierbei ist eine vorausgehende besonders sorgfältige Größenchargierung der Samen erforderlich.

Bei sämtlichen der obigen Methoden und Vorrichtungen wird häufig der Kern verletzt und zwar nicht nur durch die mechanische Beanspruchung durch Aufprall usw., sondern speziell auch dadurch, daß das Samenhäutchen, welches den Kern schützt, durch den Schälvorgang zerstört wird. Dies führt dazu, daß der Kern bereits im Schälvorgang Öl verliert und zudem in nachteiliger Weise in direkten Kontakt mit Luftsauerstoff und Feuchte gerät.

Bei Sonnenblumensamen hat man zur Gewinnung der geschälten Kerne für die Lebensmitelindustrie vor dem Schälvorgang statt eines üblicherweise angewandten einfachen Röstvorgangs der Samen eine hydrothermische Behandlung in Wasserdampf vorgenommen, um beim nachfolgenden scharfen Trocknen der oberflächlich angefeuchteten Schalen die mechanische Bindung zwischen Fruchtfleisch bzw. Kern und Schalen aufzubrechen und auch die Samenhaut zu lockern und möglichst gleichzeitig vom Kem zu trennen (DE 32 19 421 A1). Auch Sojabohnen hat man vor dem Schälen einer Erwärmung ausgesetzt, um neben einer Lösung der Schalen von den Kernen durch Kontakt mit heißen Flächen und nachfolgende Beaufschlagung mit heißem Gasstrom das Antitrypsin im Kern zu zerstören (DE 35 44 387 A1).

In den genannten Schriften sind auch die üblichen Maßnahmen zur Abscheidung der in der Schälvorrichtung abgeschlagenen Schalenstücke mittels Sichteranlagen oder Korona-Freifallabscheidern aufgeführt. Auch Kombinationen mit Elektroseparatoren sind zur Schalenabscheidung eingesetzt worden, um die geschälten Kerne von den Schalen zu trennen.

Der Erfindung liegt die Aufgabe zugrunde, ein Verfahren und eine Vorrichtung anzugeben, die eine Schälung der Ölsaatsamen, insbesondere in Form von Sonnenblumensamen, bei möglichst verbesserter Schonung des Kerns gestatten.

Diese Aufgabe wird durch den Gegenstand der Ansprüche 1 und 9 gelöst. Bevorzugte Weiterbildungen sind in den Unteransprüchen definiert. Das erfindungsgemäße Verfahren und die Vorrichtung der Erfindung sind kostengünstig realisierbar, obgleich sie eine erfolgreiche Schälung sogar von High-Oleic-Sonnenblumensamen gestatten. Diese stark ölhaltigen Samen konnten bislang mit den konventionellen Verfahren und Vorrichtungen nur begleitet von einem nachteiligen Ölaustritt geschält werden. Gibt man sie ungeschält in eine Ölmühle, so ergeben sich zusätzlich zum hohen Ölverlust aufgrund der Bindung des Öls in den Schalen eine Reihe dem Fachmann bekannter Nachteile. Daher bedeutet die Erfindung speziell für derartige sehr ölhaltige Ölsaatsamen einen erheblichen technischen Fortschritt nicht nur im Hinblick auf die deutlich gesteigerte Ölausbeute, sondern auch, weil technische Probleme in der nachgeschalteten Ölgewinnungsanlange bei den geschälten Samen nicht mehr auftreten.

Beim erfindungsgemäßen Schälvorgang wird davon abgegangen, die einzelnen Samen gegen Platten oder Wände prallen zu lassen oder zwischen Scheiben oder Gummiwalzen zu rollen. Statt dessen werden die getrockneten Ölsaatsamen in einer Schüttgutmenge durch Rühren gegeneinander gerieben, und zwar unter gleichzeitigem Druckaufbau in der Schüttgutmenge, durch den das Schüttgut verdichtet wird. Durch das Rühren des Schüttgutes unter gleichzeitigem leichten Druckaufbau entsteht ein Druck auf die Samenschale. Durch das gleichzeitige Reiben des verdichteten Gutes in sich zerbröselt die Samenschale und der Kern bleibt annähernd erhalten und fällt aus. Dabei erlangt das gerührte Gut in seiner Substanz einen hohen Widerstand, wodurch die durch das Rühren auf das Gut ausgeübten Kräfte erhöht werden.

Auf diese Weise gelingt es, Ölsaatsamen wie Korianderkerne und getrocknete Sonnenblumenkerne ohne Zerstörung der Samenhäute und des Kerns und ohne nennenswerten Ölaustritt vollständig zu schälen und die abgeschälten Samenschalen anschließend problemlos z.B. mit einem einfachen Windsichter abzuscheiden. Durch den Wegfall der aus Zellulose gebildeten Schalen wird die Ölausbeute in einer nachgeschalteten Ölpresse auf einen sehr hohen Wert gesteigert. Die starke Ölaufnahme der übertrockenen Schalen beim Standardölgewinnungsverfahren ist damit vermieden. Die Ölausbeute erfindungsgemäß geschälter High-Oleic-Sonnenblumensamen wird auf den theoretisch höchstmöglichen Wert gesteigert.

Der Druckaufbau wird vorzugsweise durch einen im Vergleich zum Einlauf reduzierten Mengenablauf erzielt und so begrenzt, daß weder die direkte mechanische gegenseitige Druckbeaufschlagung der Ölsaatsamen und Samenschalen in der Schüttgutmenge noch eine beim Schälvorgang durch die Rührbewegung und den Druckaufbau hervorgerufene Erwärmung zu einem Ölaustritt aus den Ölsaatsamen führen. Da eine direkte Messung des Druckaufbaus innerhalb der Schüttgutmenge sich schwieriger gestaltet als eine Temperaturmessung, wird letztere bevorzugt. Vorzugsweise wird am Gutauslaß die Temperatur des geschälten Guts gemessen. Das Gut sollte möglichst noch handwarm sein (etwa 33 °C). Temperaturen, die an 60 °C heranreichen, müssen in der Regel vermieden werden. Bei High-Oleic-Sonnenblumensamen sollte eine Guttemperatur von 40 °C nicht überschritten werden. Im übrigen kann der Fachmann bei einer Steuerung der Mengenablaufreduzierung auch ohne die Temperaturermittelung mit mehreren einfachen Versuchen die Obergrenze für den Drosselungsgrad ermitteln, indem er feststellt, bei welchem Grad er bei den jeweils zu schälenden Ölsaatsamen einen beginnenden Ölaustritt beobachtet. In der weiter unten beschriebenen Vorrichtung wurde bei High-Oleic-Sonnenblumensamen das Verhältnis von Einlaufvolumen zu Auslaufvolumen auf etwa 100:90 festgelegt.

Vorzugsweise wird eine rührende Förderbewegung der Schüttgutmenge bewirkt. Nach dem weiter unten beschriebenen Ausführungsbeispiel wird hierzu die in einer schraubenförmigen Rührvorrichtung erzeugte Bewegung des Schüttgutes zum Gutauslauf der Schälvorrichtung genutzt. Die bei der Bewegung des Gutes abgespaltenen Schalenteile bilden einen wirksamen Schutz des Kernmaterials gegen Zerreibung bei schwankendem Druckaufbau im Schälvorgang. Dieser natürliche Schutz durch die Schalenteile nimmt zum Bereich der Schüttgutabfuhr hin mit der zunehmenden Menge an entschälten und somit nicht mehr geschützten Samen zu. Um diesen Effekt zu steigern, werden bevorzugt bereits abgeschiedene Schalenteile der Schüttgutmenge zusätzlich zugesetzt. Hierdurch wird das Schälergebnis weiter deutlich verbessert werden.

Auch eine größenmäßige Chargierung der Samen vor ihrer Schälung trägt zur Verbesserung des Schälergebnisses bei. So hat sich gezeigt, daß kleinere Samen den Zwischenraum zwischen größeren Körnern ausfüllen und sich so als Druckreduzierer verhalten und die Druckweitergabe unter den Samen beeinträchtigen. Dem kann man auch entgegenwirken, indem man eine konische Trommel für die Schüttgutmasse mit zum Schüttgutauslaß abnehmendem Querschnitt verwendet. Durch die (in der Herstellung allerdings kostenaufwendige) konische Ausformung verbessert sich der Druckaufbau in Flußrichtung des Gutes.

Für die Chargierung empfiehlt sich eine Samensortierung in Größenklassen von 1,5 mm Korngröße an aufwärts (in kleineren Körnern ist kaum Öl enthalten) und zwar von mm zu mm. Damit können ungleiche Drücke infolge ungleicher Samenauswirkungen vermieden werden.

Nach dem erfindungsgemäßen Verfahren werden die Ölsaatsamen und speziell die Sonnenblumensamen vor dem Schälvorgang getrocknet. Samen, deren Kern ohnehin nur eine sehr lockere oder keine Bindung zur Samenschale hat, können gegebenenfalls auch ohne Trocknung oder nur nach einer oberflächlichen Trocknung ihrer Schale erfindungsgemäß geschält werden. Das Trocknen vor dem Schälvorgang ist prinzipiell bekannt, wie weiter oben erläutert. Erfindungsgemäß wird jedoch bevorzugt so getrocknet, daß der Kern der Ölsaatsamen unter Wasserabgabe so schrumpft, daß Kern und Schale vollständig getrennt werden und nicht mehr aneinander haften. Speziell bei der Sonnenblume wird bevorzugt so getrocknet, daß ein Zwischenraum zwischen dem gehärteten Kern und der Schale entsteht. Durch die Trocknung des Kerns wird der Kern härter und bruchsicherer. Dieser Zwischenraum ist vorteilhafterweise so groß, daß der Kern beim Zerreiben der Schale frei herausfallen kann. Dies kann man beispielsweise durch Zerreiben zwischen den Fingern testen. Vorzugsweise trocknet man soweit, daß die Restfeuchte des Kerns unter 10% liegt. Bei Sonnenblumenkernen erwies es sich als besonders vorteilhaft, die Restfeuchte auf 4% oder weniger zu senken. Es hat sich gezeigt, daß man bei schonender Trocknung die gewünschte Trennung der Schale vom Kern erzielen kann, ohne die den Kern umgebende Samenhaut zu beeinträchtigen und die durch die Trocknung spröde werdende Schale soweit zu verspröden, daß sie brüchig wird.

Die erfindungsgemäße Trocknung bewirkt demnach im Gegensatz zu üblichen Trocknungsmaßnahmen an Ölsaaten keine oberflächliche Trocknung der Samen mit Zerstörung der Schale und einer Trocknung lediglich der äußeren Kernschichten, sondern eine Trocknung des gesamten Kerns einschließlich seiner inneren Schichten verbunden mit Schrumpfung und Härtung des auf diese Weise verstärkt getrockneten Kerns. So kommt es bei den gängigen Trocknern mit schnellem Durchsatz und hohen Trocknungstemperaturen dazu, daß die Außenschicht des Kerns verbackt, da sie schneller Wasserdampf abgibt als die darunter liegenden Schichten des Kerns. Der Wasserdampfaustritt aus den tieferliegenden Schichten sprengt dann die verbackte Kernaußenschicht.

Eine entsprechend schonende Trocknung erzielt man z.B. in einem Durchlufttrockner mit warmer Luft, deren Temperatur nicht in die Nähe des Wassersiedepunktes kommen sollte und vorzugsweise zumindest 10 °C unter dem Wassersiedepunkt eingestellt wird. Im Bereich unter 90 °C, vorzugsweise um 80 °C wird ein sehr guter Wasserentzug aus dem Kern erzielt. Senkt man die Temperatur deutlich ab, so kann zwar auch eine schonende Trocknung bewerkstelligt werden, jedoch nimmt die erforderliche Einwirkungszeit stark zu.

Das erfindungsgemäße Verfahren eignet sich prinzipiell für eine Vielzahl von mit Schalen versehenen Hartkörnern, bringt jedoch speziell bei Sonnenblumensamen und den High-Oleic-Sonnenblumensamen gegenüber den bisherigen, zum Teil aufwendige Vorrichtungen erfordernden Schälverfahren einen erheblichen Fortschritt. Aus diesem Grund wird die Erfindung auch anhand von Sonnenblumensamen erläutert.

Das erfindungsgemäße Verfahren sowie auch die im folgenden erläuterte Vorrichtung sind außer für Ölsaatsamen auch für andere mit Schalen versehene Früchte geeignet. So konnten Markerbsen, sogenannte Amyloseerbsen, mit sehr gutem Erfolg erfindungsgemäß geschält werden.

In der erfindungsgemäßen Vorrichtung besteht der Behälter zur Aufnahme der Schüttgutmenge und der Rührvorrichtung vorzugsweise aus einer feststehenden Trommel mit innen laufender, schraubenförmig bestückter Welle, welche das Gut in Längsachse der Trommel zu einem Gutauslauf transportiert. Bevorzugt wird ein waagerecht gelagerter Behälter mit einer in der Schüttgutmenge laufenden, an den Kopfseiten gelagerten Rührvorrichtung. In der Trommel wird ein Druckaufbau im Schüttgutvolumen dadurch erzeugt, daß das Schüttgutabfuhrvolumen auf einen geringeren Wert eingestellt wird als das Schüttgutzufuhrvolumen am Schüttguteinlaß, wie bereits oben erwähnt wurde. Auf diese Weise wird eine Verdichtung des Schüttgutes verbunden mit der gewünschten Reibung der leicht aneinander gedrückten Samen und Samenschalenteile erzielt.

Prinzipiell ist es jedoch auch möglich, einen vertikal gelagerten Rührbehälter zu verwenden und alternativ oder zusätzlich zum Druckaufbau durch Gutauslaßdrosselung einen statischen, durch die senkrechte Schüttgutsäule im Behälter hervorgerufenen Druck zu nutzen. Es ist ferner auch denkbar, das Schüttgut chargenweise zu rühren und ohne kontinuierlichen Gutauslauf zu arbeiten.

Als Rührstäbe an der Welle der Rührvorrichtung werden bevorzugt kantige Stäbe eingesetzt, die so auf der Welle angebracht sind, daß sie mit ihrer Schlagkante in die Richtung der rotierenden Rührstabbewegung weisen, so daß die Samen in der Schüttgutmenge nicht von einer senkrecht zur Umlaufrichtung planen Fläche, sondern von dieser Kante getroffen werden. Zu beiden Seiten der Kante überstreichen die Samen die angrenzenden, zurückweichenden und schräg zur Umlaufrichtung der Stäbe liegenden Stabflächen, ohne an diesen gequetscht zu werden. Die Stäbe sind bevorzugt quadratischen Querschnitts. Bei den vorzugsweise angewandten sehr hohen Drehzahlen konnte so eine stabile Rotation gewährleistet werden. Es sind jedoch prinzipiell auch Dreikantstäbe möglich, von denen eine Kante in Umlaufrichtung ausgerichtet wird.

Die Stäbe laufen bevorzugt mit nur geringem Spiel von 2 mm oder weniger zur Innenwand der Trommel. Das Spiel sollte zweckmäßigerweise den halben Korndurchmesser nicht überschreiten. Die Trommelinnenwand ist vorzugsweise glatt und im Gegensatz zu anderen Saatbehandlungsmaschinen wie Entgrannern für Getreide weder mit festen Schlagstiften noch Drahtmatten und dergleichen anderen schlagenden oder reibenden Vorrichtungen bestückt. Durch das geringe Spiel und die glatte Trommelinnenwand werden eine Ölabgabe und ein Festfahren der in der Schüttgutmasse rotierenden Teile vermieden.

Erfindungsgemäß wird in der obigen bevorzugten Vorrichtung mit hohen Drehzahlen der Welle und daraus resultierenden hohen Geschwindigkeiten am äußeren Ende der Rührvorrichtung gearbeitet. Bei einer ersten Versuchsanlage wurde mit einer Drehzahl von 1000 U/min eine Außengeschwindigkeit der Rührstabspitzen von über 15 m/s erreicht. Auch mit geringeren Drehzahlen ist ein Schälen möglich, jedoch zu Lasten des erforderlichen Zeitaufwandes. In einer späteren Vorrichtung wurde mit Drehzahlen von z.B. 1500 U/min bis 2500 U/min, vorzugsweise etwa 2000 U/min gearbeitet und an den Rührstabspitzen dieser Vorrichtung noch wesentlich höhere Rührgeschwindigkeiten erzielt. Abgesehen davon, daß die Schälvorrichtung bei hohen Drehzahlen eine entsprechend aufwendigere Konstruktion erfordert, gilt für den Rührvorgang genau wie für den Druckaufbau, daß die insgesamt hervorgerufene Erwärmung des Schüttgutes zu begrenzen ist.

Im folgenden wird die Erfindung anhand der Zeichnungen näher erläutert. Es zeigen
Figur 1 eine schematische Darstellung eines bevorzugten Ausführungsbeispiels der erfindungsgemäßen Vorrichtung zum Schälen und
Figur 2 ein Fließbild mit der in einer Schälanlage für Sonnenblumensamen angeordneten Vorrichtung aus Figur 1.

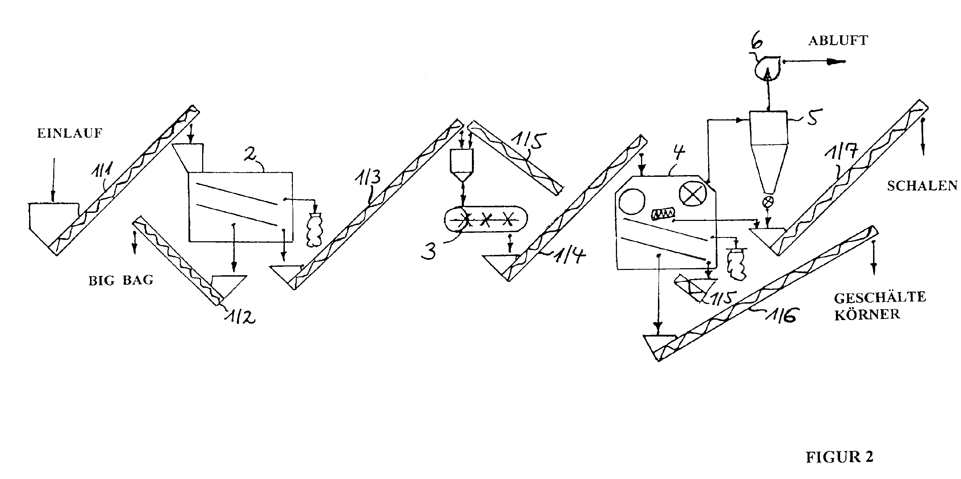

Nach dem schematischen Fließbild der Figur 2 werden die Sonnenblumensamen auf einen Rohrschneckenförderer 1/1 mit Einschüttgosse und fahrbarer Stütze sowie Füllstandswächter gegeben. Vom Rohrschneckenförderer 1/1 gelangen die Samen in eine Sortiermaschine 2 mit zwei Sieben sowie drei Abgängen. Noch im Saatgut befindliches Grobzeug gelangt über den oberen Abgang in einen Sack. Die kleinen Körner werden am unteren Abgang über einen weiteren Rohrschneckenförderer 1/2 mit Einfülltrichter einem sogenannten Big Bag oder einem Silo zugeführt. Die herausgesiebten größeren Körner werden über einen folgenden Rohrschneckenförderer 1/3 mit Einfülltrichter in den Pufferbehälter einer Schälvorrichtung 3 gegeben, die weiter unten detailliert erläutert ist. Unter deren Auslaß ist der Einfülltrichter eines weiteren Rohrschneckenförderers 1/4 angeordnet, der zu einer weiteren Sortiermaschine 4 mit Speiseeinrichtung, Schalenabsaugung, zwei Sieben und fünf Abgängen führt. Die heraussortierten geschälten Samen bzw. blanken Körner werden über den Einfülltrichter eines weitereren Rohrschneckenförderers 1/6 abgeführt. Eine noch ungeschälte Fraktion wird aus einem zweiten Ausgang der Sortiermaschine 4 entnommen und über den Einfülltrichter eines Rohrschneckenförderers 1/5 dem Pufferbehälter der Schälvorrichtung 3 zugeführt. Einem Fliehkraftabscheider 5 mit Radialventilator 6 werden über einen dritten Ausgang Kornbruchstücke mit Schalenresten zugeführt. Die abgeschiedenen Schalen fallen in den Einfülltrichter eines Rohrschneckenförderers 1/7. In diesen Einfülltrichter werden auch die Schalen aus der Schalenabsaugung der Sortiermaschine 4 gegeben.

An der Sortiermaschinen 4 ist ebenfalls auch ein Ausgang für abgetrennten Abfall vorgesehen, der einem schematisch dargestellten Sack zugeführt wird.

Die obige Schälanlage ist für einen Durchsatz an Sonnenblumensamen von 2 t/h ausgelegt.

Die Samen werden in getrocknetem Zustand, wie weiter oben erläutert, in die Anlage gegeben. Die Trocknung wurde in einem Durchlauftrockner im heißen Luftstrom von ca. 80 °C und einem Trocknerdurchsatz von etwa 500 kg pro 1,5 h vorgenommen. Benutzt wurde ein Tornado-Trockner der Firma Horstkötter & Co. KG, Beckum, mit thermostatisierter Warmluftzuleitung. Der angegebene Trocknerdurchsatz war allerdings geringer als der vom Hersteller vorgesehene Durchsatz.

Für eine schonende Trocknung sind prinzipiell auch andere Trocknerarten und Trocknungsverfahren wie eine Vakuumtrocknung einsetzbar. Wichtig ist, daß es gelingt, tatsächlich den Kern in seiner Gesamtheit zu trocknen, ohne dabei dessen äußere Schichten zu zerstören.

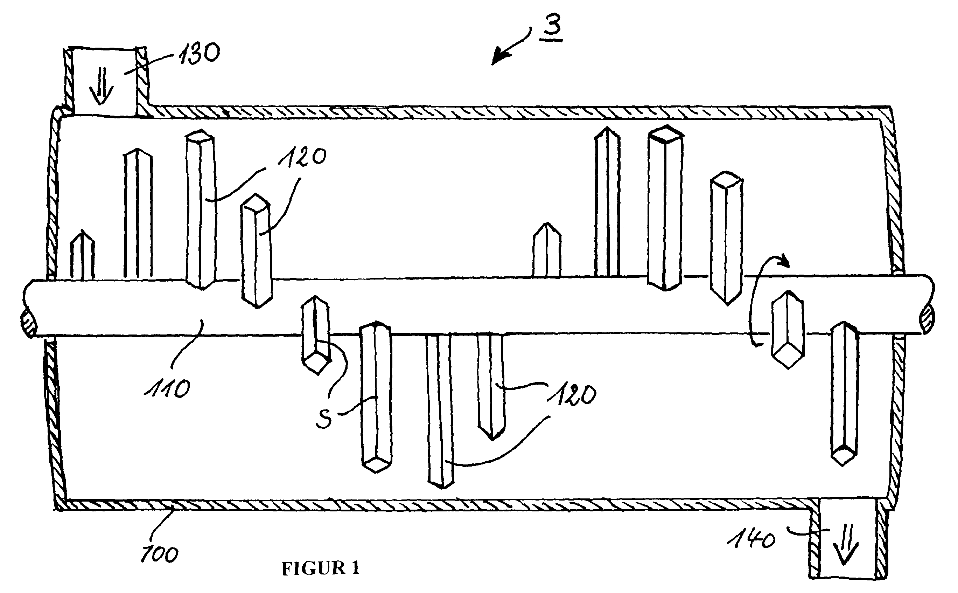

Ein wesentlicher und gegenüber dem Stand der Technik neuartiger Bestandteil der Anlage aus Figur 2 besteht in der Schälvorrichtung, von der in Figur 1 der prinzipielle Aufbau eines bevorzugten Ausführungsbeispiels gezeigt ist. In einer etwa 1,00 m langen waagerecht stehenden und statischen Stahltrommel 100 ist mittig eine Welle 110 mit rundem Querschnitt in nicht dargestellter Weise drehbar gelagert und kann auf Drehzahlen von über 2000 U/min gebracht werden. In diese Welle 110 sind Rührstäbe 120 in Form von Vierkantstählen mit quadratischem Querschnitt gekontert eingeschraubt. Sie sind verstellbar und können bei Abnutzung der in Drehrichtung weisenden Schlagkante S auf eine andere, noch nicht abgenutzte Schlagkante verstellt werden. Im Ausführungsbeispiel betrug der Zwischenraum zwischen den Rührstäben 120 bei einer Querschnittsfläche der Stäbe von 2,25 cm² etwa drei bis vier Zentimeter. Das Spiel zwischen Schlagstäben und Trommelinnenwand betrug maximal 2 mm. Wie schematisch angezeigt, folgen die Stabachsen einer Schraubenlinie. Es ist auch möglich, die Stäbe so anzuordnen, daß sich nebeneinander mehrere Schraubenlinien ergeben. Bei einer Doppelreihenausbildung sollten die Stäbe einer Reihe gegenüber denen der anderen Reihe auf Lücke versetzt angeordnet sein.

Den mit (nicht dargestelltem) Handrad mittels eines Schiebers (nicht dargestellt) einstellbaren Einlaß 130 zugeführten Samen werden Schalen zugegeben, mit denen die oben dargelegte positive Wirkung erzielt wurde. Ein Optimum an Schalenzugabe lag für die geschälten High-Oleic-Sonnenblumensamen bei etwa 3 Gew.%. Der Schalenanteil der Samen beträgt etwa 17 Gew.% und wurde durch die Zugabe auf etwa 20 Gew.% erhöht. Die Zugabemenge wird allerdings davon abhängen, wie groß die chargierten Körner sind, da mit steigender Korngröße mehr Leerraum zwischen den Körnern bzw. Samen und damit weniger berührende Druckstellen entstehen. Diesem Effekt wird durch Auffüllen mit Schalenmaterial begegnet.

Der Auslauf 140 ist wiederum mit einem von einem Handrad betätigten Schieber einstellbar. Der Auslaßquerschnitt wird in der gezeigten Vorrichtung für Sonnenblumensamen so eingestellt, daß Einlauf- zu Auslaufvolumen im Verhältnis 100 : 90 steht. Dieser Wert erwies sich bei einer Wellendrehzahl von 2100 U/min als günstig, um einen geeigneten Druckaufbau in der Schüttgutmasse innerhalb der Trommel 100 zu erzeugen.

Durch eine bevorzugt vorgesehene Synchronsteuerung von Ein- und Auslaßquerschnitt kann dafür gesorgt werden, daß z.B. bei variiertem Einlaßquerschnitt während des Schälvorgangs der Auslaufquerschnitt synchron so angepaßt wird, daß das gewünschte Volumenverhältnis beibehalten wird.

Es empfiehlt sich, am Auslauf ein Thermometer einzubauen und die Temperatur des ausgetragenen Gutes zu überwachen. Wird ein zuvor abhängig vom Schälgut festgelegter, kritischer Temperaturwert (von beispielsweise 40 °C) überschritten, so kann ein vorgesehener Abschaltmechanismus angesteuert werden und die Schälvorrichtung abschalten. Darüber hinaus bietet sich auch die Möglichkeit, über einen kontinuierliche Temperaturerfassung, eine Steuergröße für die Steuerung von Ein- und Auslaufquerschnitt zu gewinnen und die Schälvorrichtung geregelt zu betreiben.

## Patentansprüche

1. Verfahren zum Schälen von Ölsaatsamen, insbesondere Sonnenblumensamen, bei dem vorzugsweise getrocknete Ölsaatsamen beim Schälvorgang durch Rühren und unter Druckaufbau innerhalb einer räumlich eingegrenzten Schüttgutmenge aus diesen Ölsaatsamen gegeneinander und gegen die in der Schüttgutmenge gehaltenen, abgelösten Schalenteile gedrückt und gerieben werden.

2. Verfahren nach Anspruch 1,
dadurch gekennzeichnet,
daß der Schüttgutmenge zusätzlich bereits abgelöste Schalenteile aus einer nachgeschalteten Verfahrenstrennstufe zugesetzt werden.

3. Verfahren nach Anspruch 1 oder 2,
dadurch gekennzeichnet,
daß die Ölsaatsamen vor dem Schälvorgang soweit getrocknet werden, daß sich ihr durch Feuchtigkeitsabgabe geschrumpfter Kern von der Samenschale trennt und sich insbesondere im Fall von Sonnenblumensamen ein Zwischenraum zwischen dem Kern und der Samenschale bildet.

4. Verfahren nach einem der vorhergehenden Ansprüche,
dadurch gekennzeichnet,
daß der im Schüttgut aufgebaute Druck auf maximale Werte begrenzt wird, bei denen die auf die Ölsaatsamen wirkende Druckkraft und eine in der Schüttgutmenge hervorgerufene Temperaturerhöhung noch nicht zum Ölaustritt führen, und daß eine Drucküberwachung und - steuerung vorzugsweise über eine Messung der Temperatur von aus der Schüttgutmenge entnommenem geschälten Gut erfolgen.

5. Verfahren nach einem der vorhergehenden Ansprüche,
dadurch gekennzeichnet,
daß der Druckaufbau durch ein relativ zum Schüttgutzufuhrvolumen verringertes Schüttgutabfuhrvolumen und die Umdrehungszahl eines Rührvorrichtungsantriebs gesteuert wird, wobei bevorzugt hohe Drehzahlen angewandt werden, bei denen die maximalen Geschwindigkeiten an den Rührvorrichtungen mehr als 15 m/s betragen.

6. Verfahren nach einem der vorhergehenden Ansprüche,
dadurch gekennzeichnet,
daß die Rührbewegung als gleichzeitige Förderbewegung von der Stelle der Schüttgutzufuhr zur Stelle der Schüttgutabfuhr erfolgt.

7. Verfahren nach einem der vorhergehenden Ansprüche,
dadurch gekennzeichnet,
daß die Ölsaatsamen nach Samengröße chargiert in die Schüttgutmenge gegeben werden, wobei die Ölsaatsamen bevorzugt nach Samengrößen von mm zu mm sortiert werden.

8. Verfahren nach einem der vorhergehenden Ansprüche,
dadurch gekennzeichnet,
daß Sonnenblumensamen so schonend getrocknet werden, daß die Restfeuchte ihres Kerns auf höchstens 10% Restfeuchte oder weniger, im Fall von Sonnenblumensamen bevorzugt auf etwa 4% Restfeuchte verringert wird, wobei die angewandte Trocknungstemperatur wenigstens etwa 10 °C unter der Wassersiedetemperatur liegt.

9. Vorrichtung zum Schälen von Ölsaatsamen, insbesondere Sonnenblumensamen, aufweisend einen Behälter zur Aufnahme einer Schüttgutmenge aus Ölsaatsamen und eine darin angeordnete, in der Schüttgutmenge gehaltene Rührvorrichtung zur rührenden Bewegung und Reibung der Ölsaatsamen, unter Druckaufbau innerhalb der Schüttgutmenge, gegeneinander und gegen die in der Schüttgutmenge gehaltenen, abgelösten Schalenteile.

10. Vorrichtung nach Anspruch 9,
dadurch gekennzeichnet,
daß der Behälter eine feststehende, auf der Innenseite unbestückte Trommel (100) mit vorzugsweise glatter Oberfläche ist und die Rührvorrichtung eine sich in Längsrichtung der Trommelachse erstreckende Welle (110) umfaßt, an der kantige Rührstäbe (120) mit einer in Richtung der rotierenden Rührstabbewegung weisenden Schlagkante (S) angebracht sind.

11. Vorrichtung nach Anspruch 10,
dadurch gekennzeichnet,
daß die Rührstäbe (120) mit geringem Spiel von der Trommelachse bis an die Trommelinnenwand reichen und vorzugsweise einen rechteckigen Querschnitt haben.

12. Vorrichtung nach einem der Ansprüche 10 und 11,
dadurch gekennzeichnet,
daß die Rührstäbe (120) längs der Welle (110) beabstandet und auf der Welle winklig derart gegeneinander versetzt angeordnet sind, daß die Stabachsen einer Schraubenlinie folgen.

13. Vorrichtung nach einem der Ansprüche 10 bis 12,
dadurch gekennzeichnet,
daß die Trommel steuerbare Ein- und/oder Auslaßquerschnitte, vorzugsweise mit einer Synchronsteuerung zwischen Trommelein- und -auslaß für das Schüttgut aufweist.

14. Vorrichtung nach einem der Ansprüche 10 bis 13,
dadurch gekennzeichnet,
daß die Trommel zum Auslaß hin konisch verjüngt ausgebildet ist.

15. Vorrichtung nach einem der Ansprüche 9 bis 14,
dadurch gekennzeichnet,
daß die Vorrichtung mit einer vorgeschalteten Trocknungseinrichtung kombiniert ist, in der die Ölsaatsamen vor dem Schälvorgang soweit trockenbar sind, daß sich ihr durch Feuchtigkeitsabgabe geschrumpfter Kern von der Samenschale trennt und sich insbesondere im Fall von Sonnenblumensamen ein Zwischenraum zwischen dem Kern und der Samenschale bildet.
